(19)

Europäisches
Patentamt
European
Patent Office
Office européen
des brevets

(11) **EP 4 023 053 A1**

(12) **EUROPEAN PATENT APPLICATION**
published in accordance with Art. 153(4) EPC

(43) Date of publication:
06.07.2022 Bulletin 2022/27

(21) Application number: 20858183.5

(22) Date of filing: 25.08.2020

(51) International Patent Classification (IPC):
*A01G 7/00* (2006.01)     *A01G 9/00* (2018.01)
*A01G 9/02* (2018.01)

(52) Cooperative Patent Classification (CPC):
**A01G 7/00; A01G 9/00; A01G 9/02**

(86) International application number:
**PCT/JP2020/031962**

(87) International publication number:
**WO 2021/039765 (04.03.2021 Gazette 2021/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.08.2019 JP 2019153999**

(71) Applicant: **Kajual Office Inc.
Tokyo 107-0051 (JP)**

(72) Inventor: **HASHIBA, Iwao
Tokyo 107-0052 (JP)**

(74) Representative: **Markfort, Iris-Anne Lucie
Lorenz & Kollegen
Patentanwälte Partnerschaftsgesellschaft mbB
Alte Ulmer Straße 2
89522 Heidenheim (DE)**

(54) **CULTIVATION METHOD, CULTIVATION MECHANISM, AND CULTIVATION SYSTEM**

(57)    [Object] To achieve indoor cultivation using a simple facility at low operating cost and achieve excellent interior design.

[Solving Means] A cultivation mechanism 101 is installed to cultivate crops, the cultivation mechanism 101 having cultivation regions that are for cultivating crops and are disposed in multiple stages in the vertical direction, having a structure in which cultivation surfaces 3 as the cultivation regions of the respective stages are entirely exposed to natural light of an amount necessary for growth of the crops, being powered by electricity to be capable of supplying and circulating water to the crops, and having two-sided designability that enables the cultivation mechanism 101 to serve as interior decoration even when viewed in a direction from a back side of the cultivation mechanism relative to a light source for causing the crops to photosynthesize, in a state in which the cultivation surfaces 3 are directed to the light source, in a vicinity of a window 103 in an indoor space in which temperature is routinely controlled by an air conditioning device such that the cultivation surfaces 3 of the respective stages are exposed to natural light through the window 103.

FIG.1

## Description

Technical Field

the present invention relates to a cultivation method, a cultivation mechanism, and a cultivation system for cultivating crops such as strawberries.

Background Art

In the past, there have been open-field cultivation and greenhouse cultivation as methods of cultivating crops. In the open-filed cultivation, harmful components contained in rainwater cause lesions on crops and there is also feeding damage by pests. In the greenhouse cultivation, there is a cost to install a greenhouse facility and there is a cost to cool and heat in order to prolong the harvest season.

In recent years, cultivation of crops has been industrialized, and a plant factory with completely artificial light using LEDs and a plant factory using sunlight have been put to practical use (see Patent Literature 1).

Citation List

Patent Literature

Patent Literature 1: Japanese Patent Application Laid-open No. 2019-62769

Non-Patent Literature

Non-Patent Literature 1: https://monoist.atmarkit.CO.JP/mn/articles/1207/06/news012_4.HTML

Disclosure of Invention

Technical Problem

In the existing plant factory, a factory site, light source lighting, air conditioning control, and the like cost a lot, and it is difficult to achieve a unit yield (yield per planted area) that can be established as agriculture unless it is a large-scale factory.

In view of the circumstances as described above, it is an object of the present invention to provide a cultivation method, a cultivation mechanism, and a cultivation system that are capable of achieving indoor cultivation using a simple facility at low operating cost and achieving excellent interior design in indoor cultivation.

Solution to Problem

A cultivation method according to an embodiment of the present invention includes: installing a cultivation mechanism that has cultivation regions that are for cultivating the crops and are disposed in multiple stages in a vertical direction, has a structure in which the cultivation regions of the respective stages are entirely exposed to natural light of an amount necessary for growth of the crops, is capable of supplying water to the crops, and has two-sided designability that enables the cultivation mechanism to serve as interior decoration even when viewed in a direction from a back side of the cultivation mechanism relative to a light source for causing the crops to photosynthesize, in a state in which the cultivation regions are directed to the light source, in a vicinity of a window such that the cultivation regions of the respective stages are exposed to natural light through the window in an indoor space in which temperature is routinely controlled by an air conditioning device for the purpose other than adjustment of a growth environment of the crops to cultivate the crops.

A cultivation mechanism according to an embodiment of the present invention includes: cultivation shelves in which shelf boards having cultivation regions that function as a waterway for cultivating crops and supplying water to crops to be cultivated are disposed in multiple stages in a vertical direction; and an electric pump for water circulation and a water storage tank that circulate the water drained from the cultivation regions of the respective shelf boards to the cultivation regions of the respective shelf boards, in which the cultivation mechanism has a mechanism capable of arbitrarily adjusting intervals between the shelf boards, and a depth of each of the cultivation regions as viewed from one side of the cultivation shelves is set such that an entire range necessary for growth of the crops in each of the cultivation regions is exposed to natural light collected from the one side in the adjusted intervals between the shelf boards.

A cultivation mechanism according to an embodiment of the present invention is a cultivation mechanism that has cultivation regions in multiple stages in a vertical direction, each of the cultivation regions functioning as a waterway for cultivating crops and supplying water to crops to be cultivated, the cultivation regions being tilted to one side, intervals between the stages being narrowed to increase density of the cultivation regions, including: an electric pump for water circulation and a water storage tank that circulate the water drained from each of the cultivation regions to each of the cultivation regions, wherein natural light can be directly collected in the cultivation regions from the one side when the cultivation mechanism is closed, the cultivation mechanism has interior designability on a back surface side of the cultivation regions when the cultivation mechanism is closed, and the cultivation mechanism has a structure that can be opened and closed with a pole as an axis so that the crops can be cared and/or harvested from the other side when the cultivation mechanism is opened.

In a cultivation system according to an embodiment of the present invention, the cultivation mechanism described above is used and the cultivation mechanism is installed in a building such that the cultivation regions of the cultivation mechanism are close to a window of the building.

A cultivation method according to an embodiment of the present invention includes: installing a cultivation mechanism that has a cultivation region that is for cultivating the crops and is disposed in a single stage, is capable of supplying water to the crops, and has a structure in which the water is drained to a lower part of the cultivation region such that the water does not stay in the cultivation region and the drained water is received and does not flow out of the cultivation mechanism, in a vicinity of a window such that the cultivation region is exposed to natural light through the window in an indoor space in which temperature is routinely controlled by an air conditioning device to cultivate the crops, the cultivation mechanism including a water storage tank that stores the water drained from the lower part of the cultivation region, an electric pump for circulating the water stored in the water storage tank to the cultivation region, and a solar power generation panel for supplying electric power to the electric pump; and supplying and circulating the water to the cultivation region in the single stage without using external electric power.

Advantageous Effects of Invention

In accordance with the present invention, it is possible to achieve indoor cultivation using a simple facility at low operating cost and achieve excellent interior design in indoor cultivation. Brief Description of Drawings

[Fig. 1] Fig. 1 is a plan view showing a configuration of a cultivation system according to an embodiment of the present invention.
[Fig. 2] Fig. 2 is a perspective view showing a configuration of a cultivation mechanism according to an embodiment of the present invention.
[Fig. 3] Fig. 3 is a front view of the cultivation mechanism shown in Fig. 2.
[Fig. 4] Fig. 4 is a side view of the respective stages of the cultivation mechanism shown in Fig. 2 and Fig. 3.
[Fig. 5] Fig. 5 is an enlarged view of part of Fig. 4.
[Fig. 6] Fig. 6 is a perspective view of the cultivation mechanism showing another example of a circulating waterway.
[Fig. 7] Fig. 7 is a perspective view of the cultivation mechanism showing an example of placing a planter flat.
[Fig. 8] Fig. 8 is a perspective view showing a configuration of a cultivation mechanism according to another embodiment of the present invention.
[Fig. 9] Fig. 9 is a cross-sectional view of the cultivation mechanism shown in Fig. 8 as viewed from the side surface.
[Fig. 10] Fig. 10 is a perspective view showing an example in which an inner pot is housed in an outer pot according to another embodiment of the present invention.
[Fig. 11] Fig. 11 is a cross-sectional view of the example in which an inner pot is housed in an outer pot shown in Fig. 10.
[Fig. 12] Fig. 12 is a perspective view showing a configuration of a cultivation mechanism according to another embodiment of the present invention.
[Fig. 13] Fig. 13 is a cross-sectional view of the cultivation mechanism shown in Fig. 12.
[Fig. 14] Fig. 14 is a perspective view showing a configuration of a cultivation mechanism according to still another embodiment of the present invention.
[Fig. 15] Fig. 15 is a cross-sectional view of the cultivation mechanism shown in Fig. 14 as viewed from the side surface.
[Fig. 16] Fig. 16 is a cross-sectional view of a shelf board shown in Fig. 14 and Fig. 15.
[Fig. 17] Fig. 17 is a perspective view showing a configuration of a cultivation mechanism according to still another embodiment of the present invention.
[Fig. 18] Fig. 18 is a schematic cross-sectional view showing a configuration of a cultivation mechanism according to still another embodiment of the present invention.
[Fig. 19] Fig. 19 is a schematic cross-sectional view showing a configuration of a cultivation mechanism according to still another embodiment of the present invention.

Mode(s) for Carrying Out the Invention

In the existing vertical multi-stage cultivation mechanism in a plant factory, it is necessary to supply power for lighting for growth such that the back of the respective stages is exposed to light and the cost-effectiveness of growing crops is low. In a green wall type vertical multi-stage mechanism, the growth surface is directed only to the appreciation side, and only the bottom surface and the side surface can be observed from the room when the mechanism is installed facing the outside by the window in the room, whereby the function as interior decoration is low. There is no vertical cultivation mechanism including a circulating waterway in which the mechanism can be appreciated from the room or a mechanism having excellent interior design can be observed from the room and only natural light or the existing office lighting is used as a photosynthesis light source.

The existing indoor cultivation mechanism includes only those that do not consider interior design for growth in a plant factory, need an artificial light source although the unit yield is high, and are not suitable for installation in living spaces such as offices, or those that emphasize on the value as office interior decoration, are not premised on the monetization of agriculture by harvesting crops, and cannot achieve a unit yield (yield per planted area) equivalent to that of the existing agriculture by growing crops by full-timer farmers or supporting crop growth by full-time farmers.

In the existing plant factory, a factory site, light source lighting, and air conditioning control cost a lot, and it is difficult to achieve a unit yield that can be established as agriculture unless it is a large-scale factory.

The present inventors focused on the fact that the air conditioning in an office where people are active needs to heat and cool the air away from the people but the efficiency of receiving the effect is extremely low and that a glass window of an office has a transmittance of sunlight higher than that of a greenhouse, and devised the present invention.

A cultivation method according to an embodiment of the present invention includes: installing a cultivation mechanism that has cultivation regions that are for cultivating the crops and are disposed in multiple stages in a vertical direction, has a structure in which the cultivation regions of the respective stages are entirely exposed to natural light of an amount necessary for growth of the crops, is capable of supplying water to the crops, and has two-sided designability that enables the cultivation mechanism to serve as interior decoration even when viewed in a direction from a back side of the cultivation mechanism relative to a light source for causing the crops to photosynthesize, in a state in which the cultivation regions are directed to the light source, in a vicinity of a window such that the cultivation regions of the respective stages are exposed to natural light through the window in an indoor space in which temperature is routinely controlled by an air conditioning device for the purpose other than adjustment of a growth environment of the crops to cultivate the crops.

Typically, the cultivation mechanism is powered by electricity to be capable of supplying and circulating the water to the crops.

As a result, it is possible to achieve indoor cultivation using a simple facility at low operating cost and achieve excellent interior design.

The cultivation method according to an embodiment of the present invention further includes: using each sunshine duration as a classification factor for each of the cultivation mechanisms to create a record ledger; and reaggregating, for each common classification, 50 cm mesh to 50 m mesh units of extremely small agricultural lands as agricultural lands of virtually the same condition to perform virtual large-scale agriculture. Typically, the cultivation method according to an embodiment of the present invention further includes: using, when using an existing indoor living working environment as an agricultural land, a window direction and air-conditioning set temperature of an installation environment, which are characteristic factors, as a classification factors of the extremely small agricultural lands together with a cumulative sunshine duration for each solar zenith angle of the installation environment of the cultivation mechanism during a period of growing the crops; and virtually dividing the extremely small agricultural lands into groups with shifted seasons on a basis of temperature, an amount of water, and a sunshine duration for each sunshine angle and changing growth conditions to avoid harvesting out of season and/or concentration of harvest season.

In the existing concept of virtual large-scale agriculture or franchise-type agriculture, the control of the amount of sunshine is not statistically used on a scale of $1m^2$ and the strategy for improving growth is the same in each agricultural land. In the agriculture that subdivides the same agricultural land and digitizing the environmental conditions to improve growth efficiency, the temperature control, the control of the amount of water, and the like are performed for each crop or installation unit, but individual control or classification is not performed for the amount of sunshine because the conditions are the same in the same agricultural land (see Non-Patent Literature 1).

In the existing environmental-based indoor agriculture, it is necessary to use a vertical cultivation mechanism in order to grow crops efficiently by a window, but the sunlight near the vertical direction (exceeding the solar zenith angle of 70 degrees) hardly illuminates the crops due to the cultivation shelf in the upper stage and the ceiling of the installation floor, the time zone in which all the stages are exposed to sunlight and the angle thereof vary widely depending on the installation environment of the cultivation mechanism due to the direction of a building that blocks the sunlight, and the like, and it is necessary to perform classification as to which season's temperature and sunshine in the natural environment are close to each installation environment in order to perform virtual large-scale agriculture, making it possible to grow crops out of season.

In the cultivation method according to an embodiment of the present invention, the cultivation mechanism includes cultivation shelves in which shelf boards having cultivation regions that function as a circulating waterway for supplying water to the crops are disposed in multiple stages in a vertical direction, the cultivation method further including: installing the cultivation mechanism such that a front surface of the cultivation shelves is close to the window; and adjusting intervals between the shelf boards such that an entire range that is desired to be exposed to direct sunlight for proper growth of the crops in the cultivation regions in all the stages is exposed to direct sunlight through the window and a space where the crops can be appreciated from a back surface side of the cultivation shelves and the crops can be harvested, daylighting to a room, and a view to an outside of the room can be provided. Meanwhile, in the cultivation method according to an embodiment of the present invention, the crops are not suitable for growth by direct sunlight, the cultivation method further includes adjusting, by making consideration such that a window direction where the cultivation shelves are installed is a direction different from a direction between southeast and southwest, the intervals between the shelf boards such that the cultivation regions in all the stages are not exposed to direct sunlight through the window and are exposed to optimum reflected light and a space where the crops can be appreciated from a back surface side of the cultivation shelves and the crops can be harvested, daylighting to a room, and a view to an outside of the room can be provided. Note that the intervals between the shelf boards may be further widened and/or narrowed by an installer in accordance with the layout preference or the like.

In the present invention, using the fact that the environmental temperature of an office where people are active is stable at 18°C to 35°C throughout the year and natural rainwater containing excess nitrogen and phosphorus and other organic and inorganic substances harmful to disease free growth of crops does not fall in the room, typically, the total height of the height of L×tanθ and the additional height that the installer considers necessary for achieving a view and daylighting and providing harvesting experience, θ being the solar zenith angle necessary for growth of crops, L being the depth length from the sun direction on the cultivation shelves that need to be exposed to direct sunlight for growth of crops, (or, in the case where the intervals are desired to be narrowed than L×tanθ from the viewpoint of layout even if the sunshine efficiency is reduced, the narrowed height) can be left between the shelf boards. In addition, in the present invention, by greening an office, it is possible to relax office workers and increase the labor efficiency. Further, the heat insulating effect can be achieved by the green indirect lighting by blocking direct sunlight, and water evaporation effect of plants.

In the cultivation method according to an embodiment of the present invention, the cultivation mechanism has a structure in which the cultivation regions are tilted toward a direction of a front surface and the intervals between the stages are narrowed to increase density of the cultivation regions, and can be opened and closed with a pole as an axis, the cultivation method further including installing the cultivation mechanism in a vicinity of the window such that the front surface faces a window side, making it possible to directly collect natural light in the cultivation regions through the window when the cultivation mechanism is closed, make the cultivation mechanism have interior designability on a back surface side of the cultivation regions, which is a room side, when the cultivation mechanism is closed, and care and/or harvest the crops from the room side when the cultivation mechanism is opened.

In the present invention, in an office or a house where a view from the room may be blocked, typically, a horizontal rotation type vertical cultivation mechanism or an openable/closable green wall vertical cultivation mechanism is used to make it possible to observe and harvest crops such as the leaves, stems, and fruits of the crops from the room.

The cultivation method according to an embodiment of the present invention further includes setting, in exchange for provision of the cultivation mechanism to the indoor space as interior decoration and/or acting for farm work necessary for harvesting crops of the cultivated crops, a right to use a region in which the cultivation mechanism is installed and a right to own or sell the harvested crops.

A cultivation mechanism according to an embodiment of the present invention includes: cultivation shelves in which shelf boards having cultivation regions that function as a waterway for cultivating crops and supplying water to crops to be cultivated are disposed in multiple stages in a vertical direction; and an electric pump for water circulation and a water storage tank that circulate the water drained from the cultivation regions of the respective shelf boards to the cultivation regions of the respective shelf boards, in which the cultivation mechanism has a mechanism capable of arbitrarily adjusting intervals between the shelf boards, and a depth of each of the cultivation regions as viewed from one side of the cultivation shelves is set such that an entire range necessary for growth of the crops in each of the cultivation regions is exposed to natural light collected from the one side in the adjusted intervals between the shelf boards.

A cultivation mechanism according to an embodiment of the present invention may include: cultivation shelves in which shelf boards having cultivation regions that function as a waterway for cultivating crops and supplying water to crops to be cultivated are disposed in multiple stages in a vertical direction; and an electric pump for water circulation and a water storage tank that circulate the water drained from the cultivation regions of the respective shelf boards to the cultivation regions of the respective shelf boards, in which the cultivation mechanism may have a mechanism capable of arbitrarily adjusting intervals between the shelf boards, a depth of each of the cultivation regions as viewed from one side of the cultivation shelves may be set such that an entire range necessary for growth of the crops in each of the cultivation regions is exposed to natural light collected from the one side in the adjusted intervals between the shelf boards, and the cultivation mechanism may have a structure in which a roll curtain is provided on a room side of the uppermost portion of the cultivation mechanism is provided and light can be easily blocked even after the cultivation mechanism is installed such that the cultivation mechanism is easily installed in an office or the like where a view is enjoyed or light is collected when a blackout curtain is opened as necessary such as when there is a visitor although direct sunlight is blocked usually, the office or the like having a stricture in which it is difficult to open and lose the curtain due to installation of the cultivation mechanism. With this invention, it is possible to provide a cultivation mechanism in which a view and daylighting are achieved from intervals between cultivation regions while keeping the cultivation mechanism within a certain width near a window in an environment in which the degree of shading when closed is large in the case of an openable/closable green wall type cultivation mechanism, the appearance from the room does not suit the taste of the installer even when opened, and light is desired to be blocked as necessary.

A cultivation mechanism according to an embodiment of the present invention is a cultivation mechanism that has cultivation regions in multiple stages in a vertical direction, each of the cultivation regions functioning as a waterway for cultivating crops and supplying water to crops to be cultivated, the cultivation regions being tilted to one side, intervals between the stages being narrowed to increase density of the cultivation regions, including: an electric pump for water circulation and a water storage tank that circulate the water drained from each of the cultivation regions to each of the cultivation regions, in which natural light can be directly collected in the cultivation regions from the one side when the cultivation mechanism is closed, the cultivation mechanism has interior designability on a back surface side of the cultivation regions when the cultivation mechanism is closed, and the cultivation mechanism has a structure that can be opened and closed with a pole as an axis so that the crops can be cared and/or harvested from the other side when the cultivation mechanism is opened.

The cultivation mechanism according to an embodiment of the present invention further includes a fan for blowing air toward the crops. As a result, it is possible to promote self-pollination for blowing air toward crops and/or achieve favorable ventilation that contributes to the health of the crops and/or achieve the cooling effect of the environmental temperature or the ground surface temperature that have become too high.

The cultivation mechanism according to an embodiment of the present invention further includes a solar power generation panel for supplying electric power to the electric pump for water circulation and the fan. As a result, it is possible to supply water to crops and achieve ventilation without borrowing or using the existing electric power of an office or a house in which the cultivation mechanism is installed for a fee. In addition, the present invention makes it possible to independently supply electric power as the power of a sensor that observes the cultivation environmental conditions such as the cultivation soil temperature, the cultivation ground temperature, the cultivation environmental temperature, the amount of water in cultivation soil, the circulating water temperature, and the amount of sunshine, the power of an IoT device that aggregates values of the respective sensors and transmits the values to a management server, and the power of a communication device that supplies, to the IoT device, network communication to a management server, and independently charge the battery for driving these electronic apparatuses at night, and facilitates the realization of the virtual large-scale agriculture using the extremely small cultivation agricultural land as a component.

In the cultivation system according to an embodiment of the present invention, the cultivation mechanism described above is used and the cultivation mechanism is installed in a building such that the cultivation regions of the cultivation mechanism are close to a window of the building.

In the cultivation system according to an embodiment of the present invention, the cultivation mechanism has cultivation regions that function as a waterway for cultivating crops and supplying water to crops to be cultivated and are disposed in a cylindrical shape in multiple stages in a vertical direction, includes an electric pump for water circulation and a water storage tank that circulate the water drained from the respective cultivation regions to the respective cultivation regions, is capable of directly collecting natural light in all the cultivation regions from one side and performing appreciation and harvesting work from a room side by being powered by electric power to cause the cultivation regions to rotate, making it possible to install one or more mechanisms near a window of the living work space by a structure in which a circulating waterway and rotational power are completed in one tower type cultivation mechanism.

The cultivation system according to an embodiment of the present invention includes: a vertical multistage cultivation mechanism that includes water trays that function as a waterway for cultivating crops and supplying water to crops to be cultivated, cultivation shelves in which shelf boards are disposed in multiple stages in a vertical direction, cultivation regions for a planter or a plant pot placed on each of the water trays, and a pump for water circulation and a water storage tank that circulate the water drained from the water trays of the respective shelf boards to the respective water trays or the cultivation regions of the shelf boards, in which intervals between the shelf boards can be adjusted such that direct sunlight that can be collected through the window has a proper solar zenith angle and sunshine duration for growth of the crops and an entire range that is desired to be exposed to direct sunlight for proper growth of the crops in the cultivation regions in all the stages is exposed to direct sunlight, or the intervals and a window direction relative to the installation can be considered and adjusted such that crops that need to be exposed to reflected light because leaf burning is caused by direct sunlight are exposed to proper light, making it possible to make an adjustment for further widening the intervals for the purpose of achieving a view from the inside to the outside in addition to the adjustment intervals, providing a space necessary for harvest experience of the crops, achieving direct or indirect daylighting to the room and ventilation, or suiting to the layout preference of a person who uses the room in which the cultivation mechanism is installed and the demand of the user for installing the cultivation mechanism is stimulated by deliberately reducing the growth density of crops, or the adjustment intervals are narrowed for the purpose of suiting to the layout preference of the user and the demand for the installation can be stimulated by deliberately reducing the growth efficiency of crops by reducing the amount of sunshine and the crops can be appreciated from the room side.

Cultivation shelves in which shelf boards having cultivation regions that function as a waterway for cultivating crops and supplying water to crops to be cultivated are disposed in multiple stages in a vertical direction; and a pump for water circulation and a water storage tank that circulate the water drained from the cultivation regions of the respective shelf boards to the cultivation regions of the respective shelf boards are provided, the cultivation shelves have a structure in which the shelf boards are fixed to a wire rope instead of a vertical plate or a pole so as to be circulated like a Ferris wheel and intervals between the shelf boards are adjusted such that necessary direct sunlight can be collected in the cultivation regions even when two shelf boards are lined up toward the back of the room as viewed from the window side, making it possible to perform caring and provide harvesting experience even in a place where it is difficult to install a pole or perform harvesting at high places, such as a stairwell space.

The above-mentioned cultivation method and cultivation system are premised on a cultivation mechanism in which cultivation regions are disposed in multiple stages in the vertical direction, but the present invention is not limited thereto.

A cultivation method according to an embodiment of the present invention includes: installing a cultivation mechanism that has a cultivation region that is for cultivating the crops and is disposed in a single stage, is capable of supplying water to the crops, and has a structure in which the water is drained to a lower part of the cultivation region such that the water does not stay in the cultivation region and the drained water is received and does not flow out of the cultivation mechanism, in a vicinity of a window such that the cultivation region is exposed to natural light through the window in an indoor space in which temperature is routinely controlled by an air conditioning device to cultivate the crops, the cultivation mechanism including a water storage tank that stores the water drained from the lower part of the cultivation region, an electric pump for circulating the water stored in the water storage tank to the cultivation region, and a solar power generation panel for supplying electric power to the electric pump; and supplying and circulating the water to the cultivation region in the single stage without using external electric power.

This eliminates the power burden on the customer who has installed the cultivation mechanism. At this time, for example, since the water circulation mechanism and power supply mechanism are completed in units of 1 square meter, the installation quantity can be flexibly adjusted in accordance with the floor plan and space of the cultivation mechanism installation destination. As a result, these become factors that make it easy for customers as installation targets to perform installation, and the effect that "waste heat and waste cold of air conditioning in an office or a house can be used for cultivating crops", which is one of the main effects of the present invention, can be achieved even in single-stage cultivation.

The cultivation mechanism according to an embodiment of the present invention makes it possible to achieve the effect that "waste heat and waste cold of air conditioning in an office or a house can be used for cultivating crops" even in the case where a cultivation region of crops is in a single stage, and produce fruits and vegetables that are not suitable for vertical muti-stage cultivation due to high glass height, such as melons, watermelons, and tomatoes, and fruit tree crops such as grapes, mangoes, and lychees in the room at low cost.

The cultivation method according to an embodiment of the present invention further includes: setting, in exchange for provision of the cultivation mechanism to the indoor space as interior decoration and/or acting for farm work necessary for harvesting crops of the cultivated crops, a right to use a region in which the cultivation mechanism is installed and a right to own or sell the harvested crops.

In the cultivation method according to an embodiment of the present invention, the cultivation region per unit of the cultivation mechanism is 10 square meters or less and is more favorably approximately 1 square meter.

In the cultivation method according to an embodiment of the present invention, the cultivation mechanism includes an IoT device that turns on and off a power source of the electric pump, making it possible to control an operation and stopping of the electric pump from a remote location. As a result, it is possible to centrally manage a large number of cultivation mechanisms.

In the cultivation method according to an embodiment of the present invention, typically, by centrally managing the turning on and off of the respective electric pumps for water circulation of a large number of cultivation mechanisms by an IoT device, it is possible to adjust the amount of irrigation automatically or manually for each cultivation mechanism from a remote location in accordance with a window direction of the environment of the installation destination, the weather in the daylight time zone of each environment, the amount of water in the cultivation region of each cultivation mechanism measured by a sensor, and the like.

There are system that centrally manage irrigation for agriculture and systems that work with an IoT device are on the market, but both irrigation management and IoT device installation are introduced on a farm-by-field basis because both systems are costly facilities. The use of the IoT device in the present invention is to convert the on/off switch of irrigation into IoT, is a system for managing irrigation in units of cultivation mechanism and 1 square meter of a cultivation region, and is specialized for the management of room-type agriculture.

The cultivation mechanism according to an embodiment of the present invention includes a mechanism in which a space for drainage is provided under the bottom of a cultivation region such that water in soil or a culture medium does not stop even in the case where the cultivation region of crops is in a single stage or a water tray is sloped to prevent the drained water from staying, thereby guiding the drained water to a water storage tank and circulating the water in the water storage tank. As a result, the risk of root rot and other diseases is reduced as compared with a simple automatic water supply system that uses the water level difference to keep the water level constant, on-site irrigation management of potted cultivation of fruit trees can be performed only by replenishing water in the water storage tank even in an indoor space where water cannot be drained to the outside, and large-scale agriculture by centralized management with IoT devices can be performed even near windows of scattered offices or living spaces.

The cultivation mechanism according to an embodiment of the present invention is configured such that a space for drainage is provided under the bottom of a cultivation region such that water in soil or a culture medium does not stop even in the case where the cultivation region of crops is in a single stage and the water is substantially not drained by adjusting the amount of water supplied from the water storage tank so as not to exceed the amount of water retained in the soil or culture medium of the cultivation region. As a result, even for crops for which the management of water quality is desired more than the case of circulating the drained water, large-scale agriculture by centralized management with IoT devices can be performed even near windows of scattered offices or living spaces.

Hereinafter, an embodiment of the present invention will be described with reference to the drawings.

<Cultivation system>

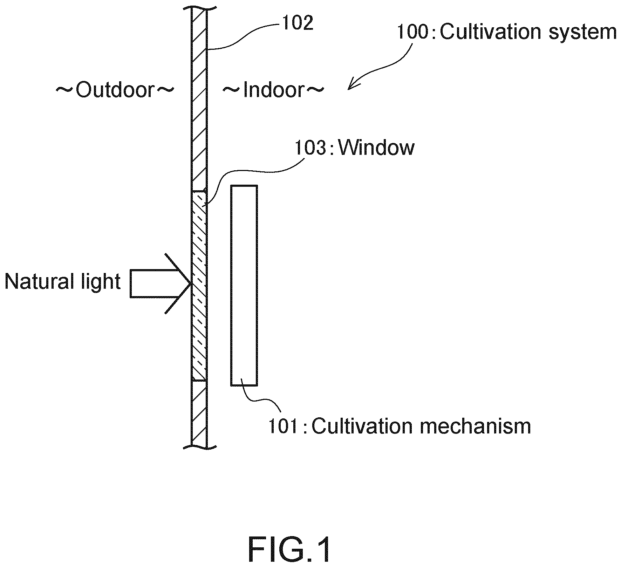

Fig. 1 is a plan view showing a configuration of a cultivation system according to an embodiment of the present invention.

As shown in the figure, in a cultivation system 100, a cultivation mechanism 101 for cultivating crops, typically strawberries, is installed in a building 102 such as an office and a house so as to be close to a window 103 of the building 102. The configuration of the cultivation mechanism 101 will be described below.

The temperature in the building 102 is not typically set with priority given to farm work but is set to air-conditioning set temperature normally required by activists and residents at the place in each office or house.

In this embodiment, typically, in exchange for provision of the cultivation mechanism 101 as interior decoration to an indoor space of the building 102 and/or acting for farm work necessary for harvesting strawberries as crops cultivated in the cultivation mechanism 101, a right to use the floor area near the window directly exposed to natural light, which is a region in which the cultivation mechanism 101 is installed, and a right to own or sell the harvested strawberries as crops is set. In addition, a right to resell the harvests to the user of the house or office and a right to sell the harvest and consumption experience as a product to a third party may be set.

In this embodiment, for example, by installing this cultivation mechanism 101 in the vicinity of each of a plurality of windows 103 of a plurality of buildings 102, a space near the window of an office or house where there is substantially no disease or pest damage is utilized as an extremely small-scale agricultural land while reducing the air conditioning management cost and these spaces are aggregated and farmed as virtual large-scale agriculture.

Typically, each sunshine duration is used as a classification factor of the cultivation mechanism 101 to create a record ledger. In the record ledger, extremely small agricultural lands in units of 50 cm mesh to 50 m mesh are reaggregated, for each common classification, as agricultural lands of virtually the same condition and farmed as virtual large-scale agriculture.

For example, a direction of the window 103 and air-conditioning set temperature of an installation environment, which are characteristic factors when using an existing indoor living working environment as an agricultural land, are used as classification factors of the extremely small agricultural lands together with a cumulative sunshine duration for each solar zenith angle of the installation environment of the cultivation mechanism during a period of growing the strawberries as crops, and the extremely small agricultural lands are virtually divided into groups with shifted seasons on a basis of temperature, an amount of water, and a sunshine duration for each sunshine angle by using, for example, the sort function of spreadsheet software.

By changing growth conditions (adjustment of supplying water and fertilizer, thinning of flowers, fruits, and stems, etc.)to for each group, it is possible to improve the efficiency of growing strawberries. Further, it is possible to intentionally avoid harvesting out of season and/or concentration of harvest season and reliably supply strawberries to the market for a long period of time.

<Configuration of cultivation mechanism (1)>

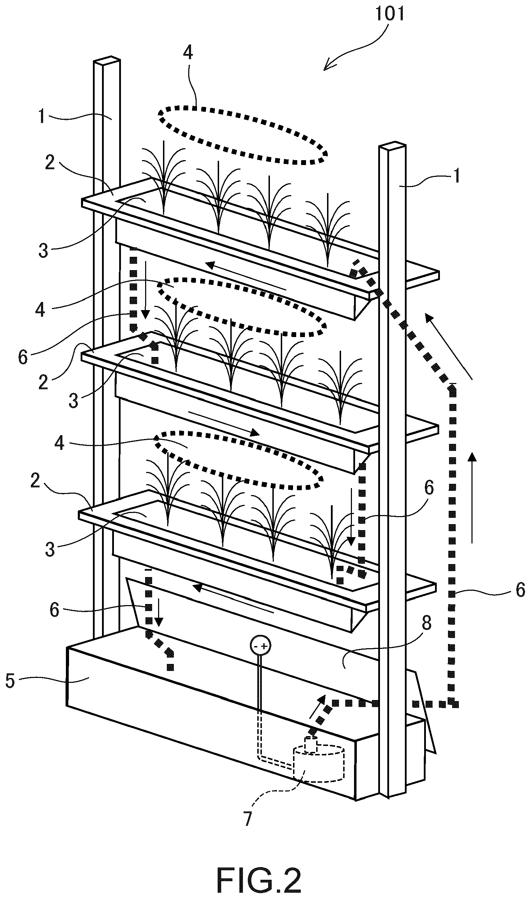

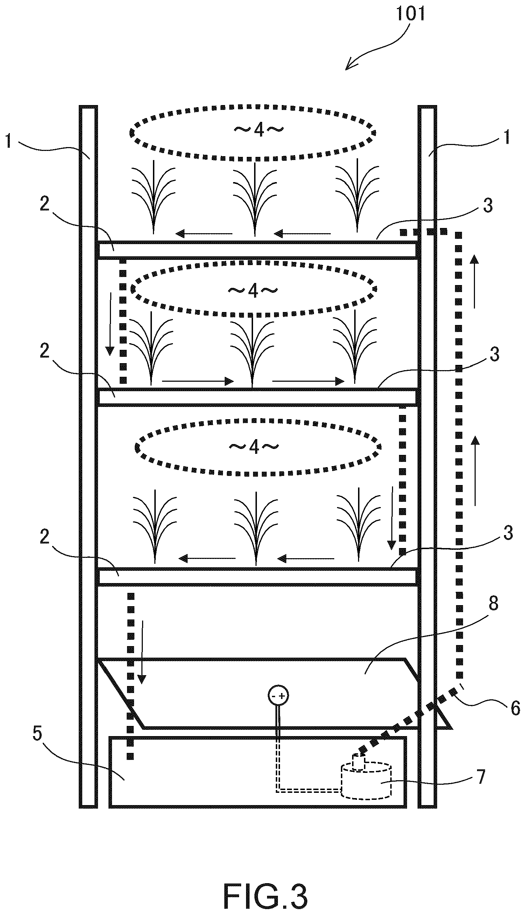

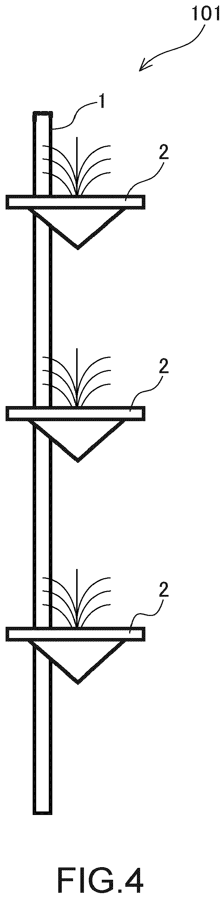

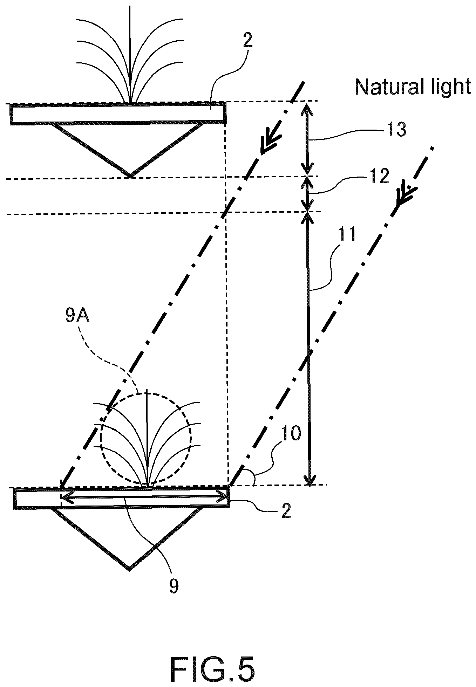

Fig. 2 is a perspective view showing a configuration of the cultivation mechanism 101 according to an embodiment of the present invention, Fig. 3 is a front view thereof, Fig. 4 is a side view of the respective stages of the cultivation mechanism 101, and Fig. 5 is an enlarged view of Fig. 4.

The cultivation mechanism 101 mainly includes, for example, cultivation shelves in which shelf boards 2 are disposed in multiple stages in the substantially vertical direction at predetermined intervals between two poles 1. Although the number of the shelf boards 2 is three in the drawings, the present invention is not limited thereto. Each of the shelf boards 2 functions as a cultivation region for cultivating crops such as strawberries and a waterway for supplying water to crops to be cultivated. The predetermined intervals between the shelf boards 2 are typically variable. In the present invention, the number of the poles 1, the number of the shelf boards 2, and the materials and shapes thereof are not particularly limited.

The upper surface of each of the shelf boards 2 has a cultivation surface 3 as a cultivation region. The predetermined intervals between the shelf boards 2 function as view to the outside/daylighting/harvesting work spaces 4. In the drawings, the region surrounded by the dotted line of the reference symbol 4 is shown for the sake of clarity, and the view/daylighting/harvesting work space 4 is not limited to this region.

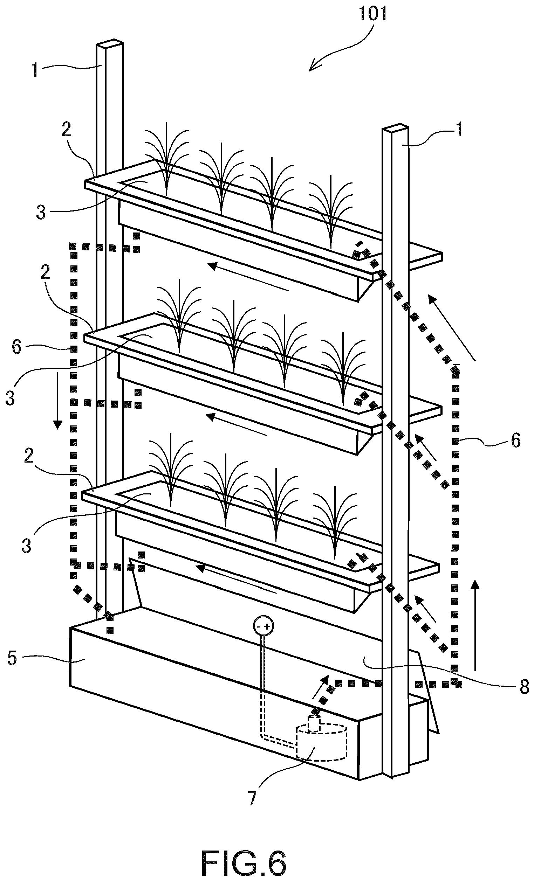

A water storage tank 5 that stores the water flowing out from the shelf boards 2 is installed at the lower part of the cultivation mechanism 101. However, the installation of the water storage tank 5 is not limited to this position. An electric pump 7 supplies the water stored in the water storage tank 5 to the shelf boards 2. The shelf boards 2, the water storage tank 5, and the electric pump 7 constitute a circulating waterway 6. In this embodiment, water is supplied from the water storage tank 5 to the shelf board 2 on the uppermost stage toward one side, the water flows from the one side of the shelf board 2 to the other side using an inclination, the water is supplied, on the other side, to the other side of the shelf board 2 therebelow, the water flows from the other side of the shelf board 2 to the one side using an inclination, the water is supplied, on the one side, to the one side of the shelf board 2 therebelow, i.e., the shelf board 2 on the lowermost stage, the water flows from the one side of the shelf board 2 to the other side using an inclination, and the water frows, on the other side, to the water storage tank 5 therebelow, thereby constituting the circulating waterway 6. It goes without saying that the circulating waterway 6 may take another form. For example, as shown in Fig. 6, the circulating waterway 6 may be configured such that water flows in parallel with respect to the respective shelf boards 2. Specifically, water is supplied from the electric pump 7 to one side of the respective shelf boards 2 through the circulating waterway 6 branching to the respective shelf boards 2, and the water is circulated from the other side of the respective shelf boards 2 to the water storage tank through the circulating waterway 6.

The cultivation mechanism 101 includes a solar power generation panel 8 for supplying electric power to the electric pump 7 and the like. In the present invention, the installation position of the solar power generation panel 8 in the cultivation mechanism 101 is not particularly limited.

In Fig. 5, the right side in the figure is the outdoor side (window side), the left side in the figure is the indoor side, and the diagonal dot-dash line in the figure represents sunshine.

The portion surrounded by the reference symbol 9A indicates a space that is desired to be exposed to direct sunlight necessary for proper growth of crops such as strawberries to be grown in this cultivation mechanism 101. The reference symbol 9 indicates a length (L) from the indoor end to the outer end of the shelf board 2 in the range in which sunlight is projected onto the ground of the shelf board 2.

The reference symbol 10 indicates an elevation angle (θ) of sunlight, which is the maximum elevation angle in the elevation angle range capable of maximizing the growth efficiency while blocking the sunshine with an excessive elevation angle at which the heat is too strong in the growth environment and growth period of crops to be grown by the installer. In the case where the elevation angle range includes the noon south angle of the season, θ equal to the noon south angle.

The reference symbol 11 indicates a height (H) with respect to the elevation angle (θ) described above, and H=L×tanθ.

The reference symbol 12 indicates a height (S) determined to be necessary in addition to H in order to achieve a view from the room to the outside.

The reference symbol 13 indicates a height (G) necessary for a soil cultivation or hydroponic cultivation mechanism in the shelf boards 2.

The cultivation mechanism 101 according to this embodiment makes it possible to adjust the intervals between the shelf boards 2 to

$$L \times \tan\theta + S + G$$

in accordance with the installation environment, the season, and the characteristics of the crops to be grown.

Note that although not shown, a small fan for blowing air toward crops may be disposed, for example, near each of the shelf boards 2. In this case, the solar power generation panel 8 may supply electric power to each of the fans. As a result, it is possible to promote self-pollination for blowing air toward crops and/or achieve favorable ventilation that contributes to the health of the crops and/or achieve the cooling effect of the environmental temperature or the ground surface temperature that have become too high.

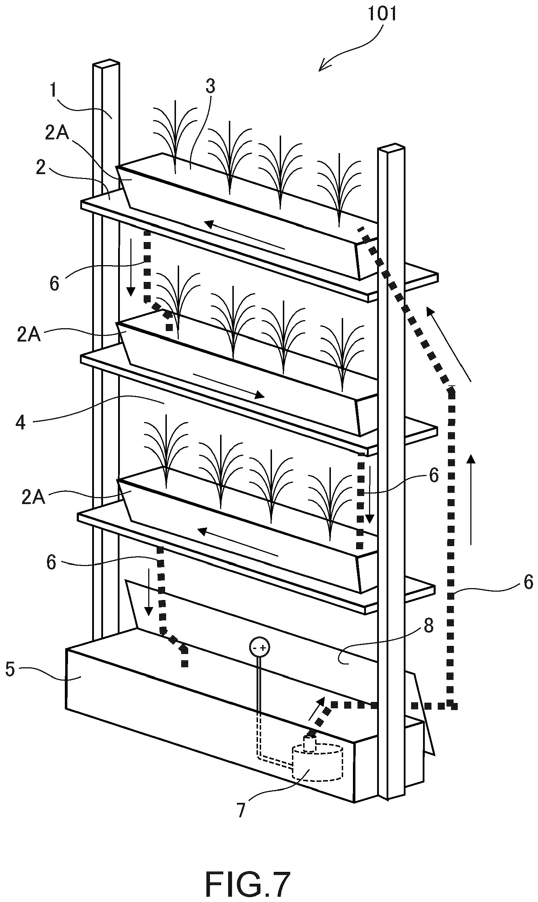

Although the shelf boards 2 constitute cultivation regions in the cultivation mechanism 101 according to this embodiment, the present invention is not limited thereto. As shown in Fig. 7, for example, a planter 2A may be installed on each of the shelf boards 2.

<Configuration of cultivation mechanism (2)>

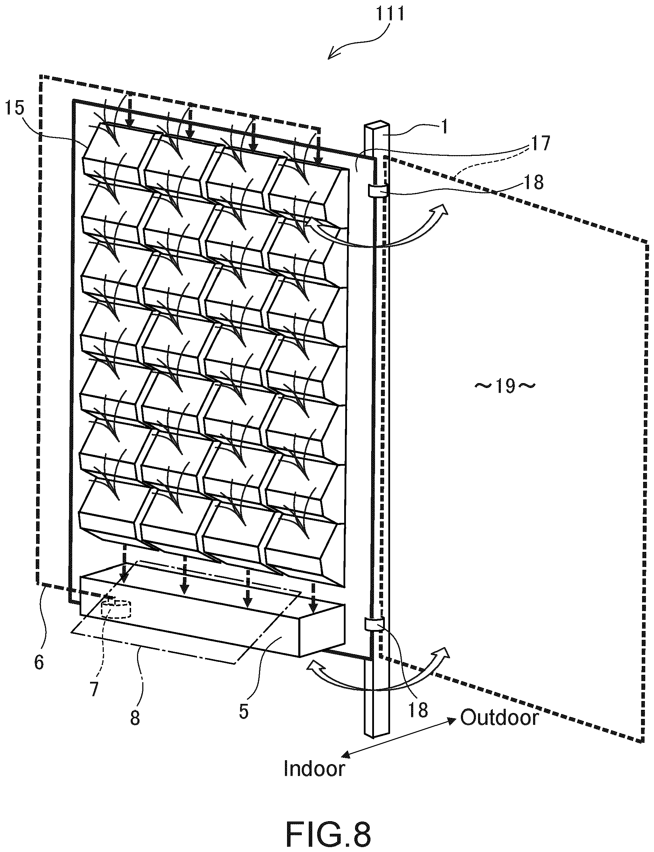

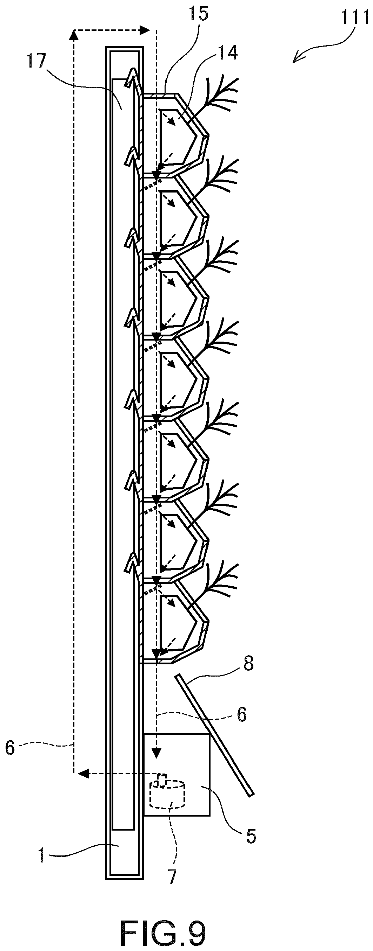

Fig. 8 is a perspective view showing a configuration of a cultivation mechanism 111 according to another embodiment of the present invention, and Fig. 9 is a cross-sectional view of the cultivation mechanism 111 as viewed from the side surface. Note that in these figures, the same elements as those of the cultivation mechanism 101 according to the embodiment shown first are denoted by the same reference symbols.

In the cultivation mechanism 111 according to this embodiment, a green wall board 17 is openably and closably attached to the pole 1 via hinges 18. In Fig. 8, the green wall board 17 shown by the dotted line indicates the closed state, and the green wall board 17 shown by the solid line indicates the closed state. Fig. 8 shows the state in which the green wall board 17 is closed. In Fig. 9, the right side in the figure indicates the outdoor side (window side) and the left side in the figure indicates the indoor side. The green wall board 17 includes, for example, a wooden board, a fence, of the like, but the material and shape thereof are not limited in the present invention.

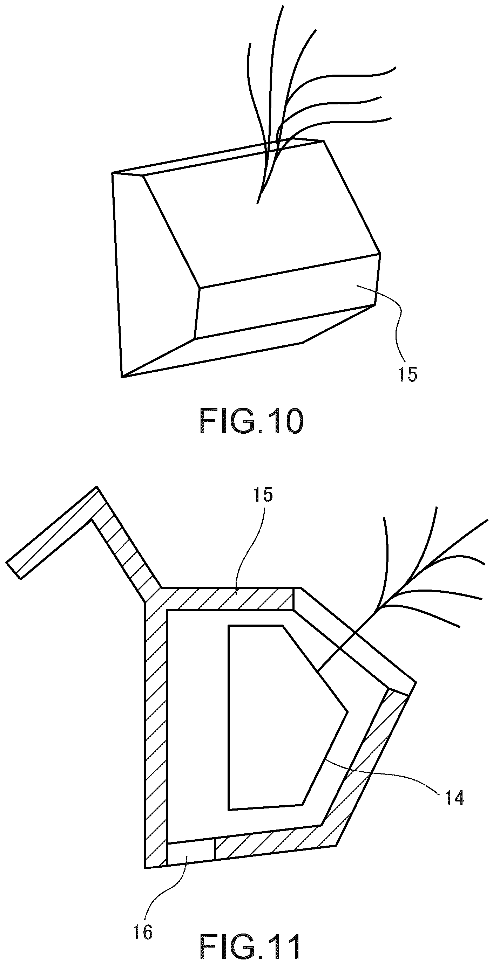

Outer pots 15 each housing an inner pot (pot) 14 are vertically and horizontally attached to the front side of the green wall board 17 (the outdoor side when the green wall board 17 is closed). For example, a hook structure is provided so that the outer pot 15 can be easily attached and detached to the green wall board 17. The hook structure is, for example, one in which a hook member attached to the outer pot 15 engages with a hole or a rail (not shown) of the green wall board 17. An example in which the inner pot 14 is housed in the outer pot 15 is shown in Fig. 10 and Fig. 11. A drain hole 16, which is a space through which the water supplied from above passes, is provided at the bottom of the outer pot 15, water is supplied to the inner pot 14 housed inside the outer pot 15, and agricultural products such as strawberries are cultivated in the inner pot 14. The respective inner pots 14 are disposed at high density such that the cultivation regions are tilted toward the direction of the front surface to reduce the intervals between the respective stages.

The back side of the green wall board 17 (the room side when the green wall board 17 is closed) includes an interior surface 19 having excellent interior design.

The cultivation mechanism 111 according to this embodiment has a structure that is openable and closable with the pole 1 as an axis, making it possible to directly collect, from the window side, natural light in the cultivation region in which the inner pots 14 are vertically and horizontally disposed when the green wall board 17 is closed, provide interior designability on the back surface side of the cultivation region, and care and/or harvest the crops from the room side when the green wall board 17 is opened.

<Configuration of cultivation mechanism (3)>

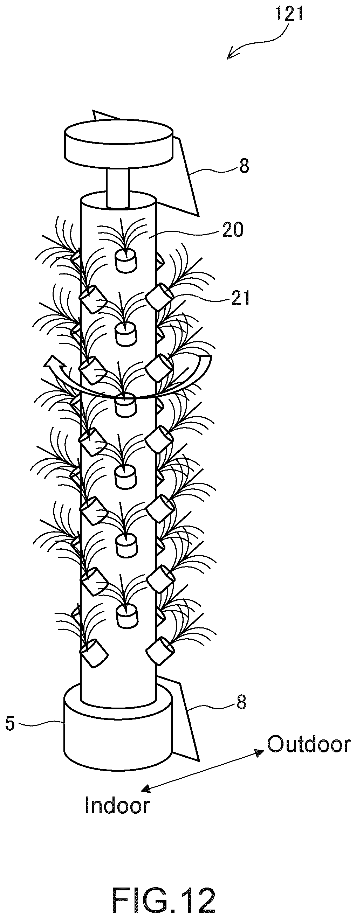

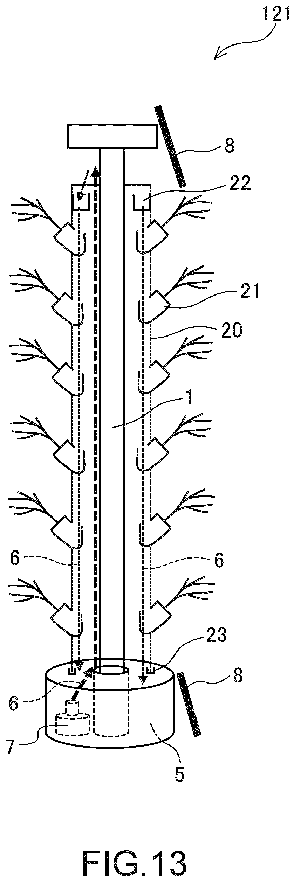

Fig. 12 is a perspective view showing a configuration of a cultivation mechanism 121 according to another embodiment of the present invention, and Fig. 13 is a cross-sectional view thereof. Note that in these figures, the same elements as those of the cultivation mechanism 101, 111 according to the embodiment described above are denoted by the same reference symbols.

In the cultivation mechanism 121, cultivation regions that function as a waterway for cultivating crops and supplying water to crops to be cultivated are disposed in a cylindrical shape in multiple stages in the vertical direction.

A rotating wall 20 is rotatably held along a rotating rail 23 at the lower part. The rotating wall 20 is rotationally drive by a motor (not shown). The motor is supplied with electric power from, for example, the solar power generation panel 8.

A large number of pots 21 for cultivating crops are disposed on the circumferential surface of the rotating wall 20. A donut-shaped water receiver 22 for distributing, to the respective pots 21, water supplied from the electric pump 7 through the circulating waterway 6 is disposed at the upper part of the rotating wall 20. Water is supplied from the donut-shaped water receiver 22 to the respective pots 21 via the circulating waterway 6. The water supplied to the respective pots 21 is circulated to the water storage tank 5 through the circulating waterway 6. As a result, it is possible to circulate the water drained from the respective cultivation regions to the respective cultivation regions.

In the cultivation mechanism 121, by rotating the cultivation region including the pots 21 disposed on the circumferential surface of the rotating wall 20, it is possible to directly collet natural light in all the cultivation regions from one side and perform appreciation and harvesting work also from the room side. Further, a standalone structure completed in one tower type cultivation mechanism in which the circulation of water through the circulating waterway 6 and the rotation driving of the rotating wall 20 can be performed with electric power supplied from the solar power generation panel 8 makes it possible to install one or more mechanisms near a window of the living work space.

<Configuration of cultivation mechanism (4)>

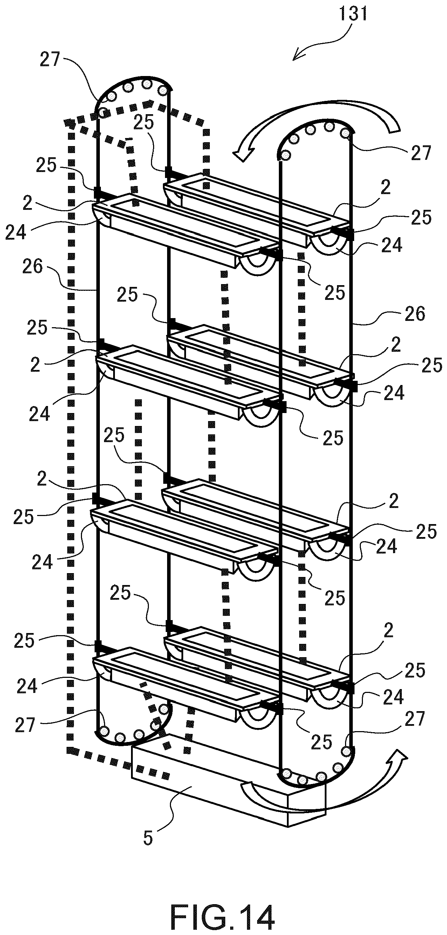

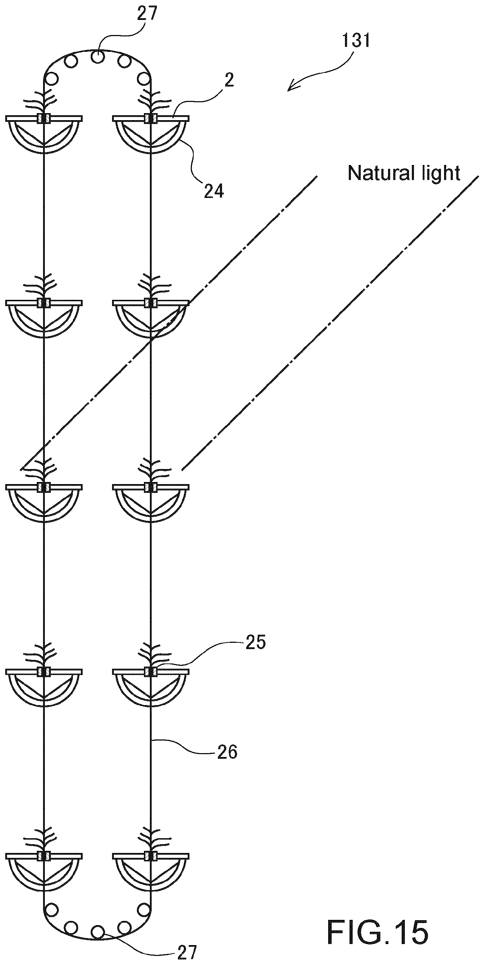

Fig. 14 is a perspective view showing a configuration of a cultivation mechanism 131 according to still another embodiment of the present invention, and Fig. 15 is a cross-sectional view of the cultivation mechanism 131 as viewed from the side surface. Note that in these figures, the same elements as those of the cultivation mechanism 101, 111, 121 according to the embodiment described above are denoted by the same reference symbols.

The cultivation mechanism 131 includes cultivation shelves in which the shelf boards 2 having cultivation regions that function as a waterway for cultivating crops and supplying water to crops to be cultivated are disposed in multiple stages in the vertical direction and these shelf boards 2 rotate from the back surface side to the front surface side or from the back surface side to the front surface side like a Ferris wheel.

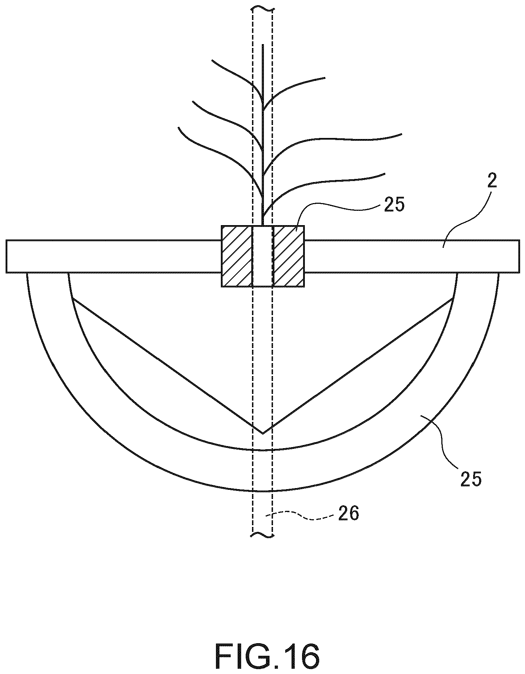

As shown in Fig. 16, each of the shelf boards 2 includes an equilibrium weight 24 for keeping the shelf board 2 in equilibrium and a rotating-rope caulking portion 25 that caulks a wire rope 26.

The respective shelf boards 2 are fixed to the wire ropes 26 on both sides instead of a vertical plate or a pole, fixed like a Ferris wheel, and rotated and circulated from the back surface side to the front surface side or from the back surface side to the front surface side via a ropeway roller 27.

In the cultivation mechanism 131, the intervals between the respective shelf boards 2 are adjusted such that necessary direct sunlight can be collected in the cultivation regions even when two shelf boards 2 are lined up toward the back of the room as viewed from the window side.

In the cultivation mechanism 131 according to this embodiment, it is possible to perform caring and provide harvesting experience even in a place where it is difficult to install a pole or perform harvesting at high places, such as a stairwell space.

<Configuration of cultivation mechanism (5)>

The cultivation method and the cultivation system described above are premised on a cultivation mechanism in which cultivation regions are disposed in multiple stages in the vertical direction, but the present invention is not limited thereto. In the following embodiments, a cultivation system including a cultivation mechanism having a cultivation region in a single stage will be described. The cultivation system including a cultivation mechanism having a cultivation region in a single stage is capable of producing fruits and vegetables that are not suitable for vertical muti-stage cultivation due to high glass height, such as melons, watermelons, and tomatoes, and fruit tree crops such as grapes, mangoes, and lychees in the room at low cost.

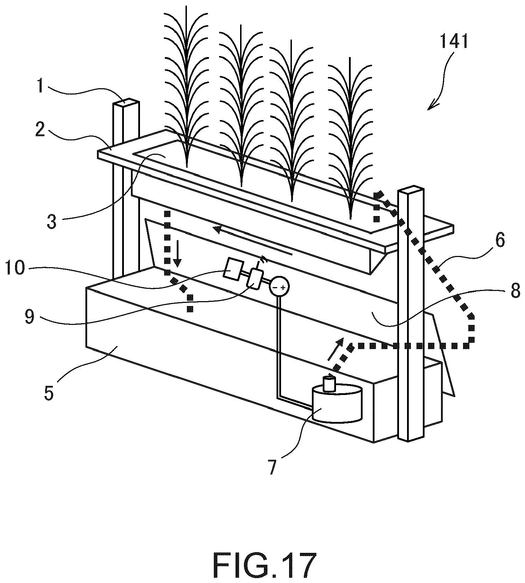

Fig. 17 is a perspective view showing a configuration of the cultivation mechanism. Note that in the figure, the same elements as those of the cultivation mechanism according to the embodiment described above are denoted by the same reference symbols. Further, since the configuration of the cultivation system using this cultivation mechanism is similar to that of the cultivation system 100 shown in Fig. 1, description will be made with reference to Fig. 1.

In the cultivation system according to this embodiment, a cultivation mechanism 141 (see Fig. 17) having a cultivation region in a single stage for cultivating crops such as fruits and vegetables and fruit trees is installed in the building 102 such as an office and a house in the vicinity of the window 103 of the building 102 as shown in Fig. 1. The temperature in the building 102 is not typically set with priority given to farm work but is set to air-conditioning set temperature normally required by activists and residents at the place in each office or house.

Similarly to the cultivation system 100 shown in Fig. 1, typically, in exchange for provision of the cultivation mechanism 141 as interior decoration to an indoor space of the building 102 and/or acting for farm work necessary for harvesting strawberries as crops cultivated in the cultivation mechanism 141, a right to use the floor area near the window directly exposed to natural light, which is a region in which the cultivation mechanism 141 is installed, and a right to own or sell the harvested strawberries as crops is set. In addition, a right to resell the harvests to the user of the house or office and a right to sell the harvest and consumption experience as a product to a third party may be set.

In this embodiment, similarly to the cultivation system 100, for example, by installing this cultivation mechanism 141 in the vicinity of each of a plurality of windows 103 of a plurality of buildings 102, a space near the window of an office or house where there is substantially no disease or pest damage is utilized as an extremely small-scale agricultural land while reducing the air conditioning management cost and these spaces are aggregated and farmed as virtual large-scale agriculture.

As shown in Fig. 17, the cultivation mechanism 141 mainly includes , for example, a cultivation shelf in which a shelf board 2 in a single stage is disposed between two poles 1. The shelf boards 2 functions as a cultivation region for cultivating crops such as strawberries and a waterway for supplying water to crops to be cultivated. The predetermined intervals between the shelf boards 2 are typically variable. In the present invention, the number of the poles 1, and the materials and shapes of the poles 1 and the shelf board 2 are not particularly limited.

The upper surface of the shelf board 2 includes the cultivation surface 3 as a cultivation region. For example, the cultivation surface 3 as the cultivation region of the cultivation mechanism 141 is favorably approximately 1 square meter. Since the water circulation mechanism and power supply mechanism are completed in units of 1 square meter, the installation quantity can be flexibly adjusted in accordance with the floor plan and space of the cultivation mechanism installation destination. As a result, these become factors that make it easy for customers as installation targets to perform installation, and the effect that "waste heat and waste cold of air conditioning in an office or a house can be used for cultivating crops", which is one of the main effects of the present invention, can be achieved even in single-stage cultivation.

The water storage tank 5 that stores the water flowing out from the shelf boards 2 is installed at the lower part of the cultivation mechanism 141. However, the installation of the water storage tank 5 is not limited to this position. The electric pump 7 supplies the water stored in the water storage tank 5 to the shelf board 2. The shelf board 2, the water storage tank 5, and the electric pump 7 constitute the circulating waterway 6. Water is supplied from the water storage tank 5 to one side of the shelf board 2, the water flows from the one side of the shelf board 2 to the other side using an inclination, and the water frows, on the other side, to the water storage tank 5, thereby constituting the circulating waterway 6.

The cultivation mechanism 141 stores, in a battery 10, the electric power generated by the solar power generation panel 8. An IoT device 9 is inserted between the battery 10 and the solar power generation panel 8. By turning on and off the IoT device 9, it is possible to control water supply by the electric pump 7.

The IoT device 9 is centrally manages by a management center (not shown) that manages a large number of cultivation mechanisms 141.

By centrally managing the turning on and off of the electric pump 7 for water circulation by the IoT device 9, it is possible to adjust the amount of irrigation automatically or manually for each cultivation mechanism from a remote location in accordance with a window direction of the environment of the installation destination, the weather in the daylight time zone of each environment, the amount of water in the cultivation region of each cultivation mechanism 141 measured by a sensor, and the like.

There are system that centrally manage irrigation for agriculture and systems that work with an IoT device are on the market, but both irrigation management and IoT device installation are introduced on a farm-by-field basis because both systems are costly facilities. The use of the IoT device 9 in the present invention is to convert the on/off switch of irrigation into IoT, is a system for managing irrigation in units of cultivation mechanism and 1 square meter of a cultivation region, and is specialized for the management of room-type agriculture.

The cultivation mechanism 141 is configured such that the shelf board 2 that is a water tray is sloped to prevent the drained water from staying such that water in soil or a culture medium does not stop even in the case where the cultivation region of crops is in a single stage, thereby guiding the drained water to the water storage tank 5 and circulating the water in the water storage tank 5. As a result, the risk of root rot and other diseases is reduced as compared with a simple automatic water supply system that uses the water level difference to keep the water level constant, on-site irrigation management of potted cultivation of fruit trees can be performed only by replenishing water in the water storage tank even in an indoor space where water cannot be drained to the outside, and large-scale agriculture by centralized management with the IoT device 9 can be performed even near windows of scattered offices or living spaces.

Further, since the cultivation mechanism 141 includes the battery 10, such control of water supply can be performed for 24 hours (all day). In the present invention, the installation position of the solar power generation panel 8 with respect to the cultivation mechanism 141 is not particularly limited.

Note that although not shown, a small fan for blowing air toward crops may be disposed, for example, near the shelf board 2. In this case, the battery 10 may supply electric power to the fan. As a result, it is possible to promote self-pollination for blowing air toward crops and/or achieve favorable ventilation that contributes to the health of the crops and/or achieve the cooling effect of the environmental temperature or the ground surface temperature that have become too high. Further, an IoT

device (not shown) may be inserted between the fan and the battery 10, and the air blowing may be centrally managed for 24 hours (all day) from a remote location, similarly to the electric pump 7.

<Configuration of cultivation mechanism (6)>

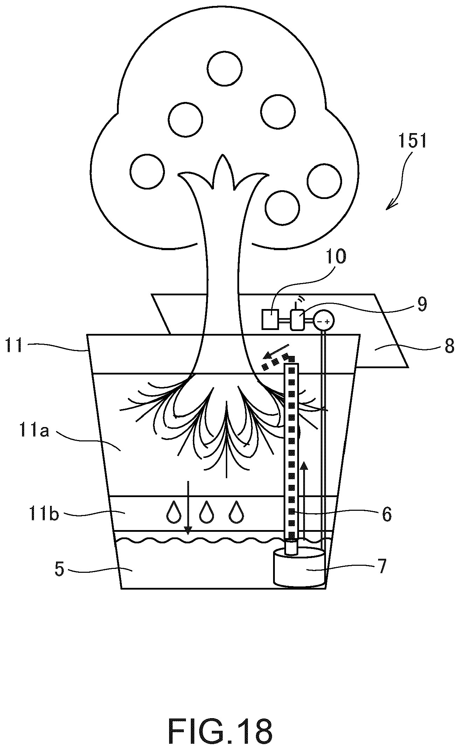

Fig. 18 is a schematic cross-sectional view showing a configuration of a cultivation mechanism suitable for cultivating fruit trees as crops. Note that in the figure, the same elements as those of the cultivation mechanism according to the embodiment described above are denoted by the same reference symbols. Further, the configuration of the cultivation system using this cultivation mechanism is similar to that of the cultivation system 100 shown in Fig. 1 and is as described in the embodiment described above.

As shown in Fig. 18, a cultivation mechanism 151 includes, for example, a plant pot 11 having an inverted cone shape. The inside of the plant pot 11 has a stacked structure including a culture medium 11a for planting fruit trees from above, a drainage space 11b, and the water storage tank 5. Note that the water storage tank 5 may be disposed inside the plant pot 11 or may be disposed outside the plant pot 11 separately from the plant pot 11.

The electric pump 7 supplies the water stored in the water storage tank 5 to the culture medium 11a. The culture medium 11a, the water storage tank 5, and the electric pump 7 constitute the circulating waterway 6. Typically, water is supplied from above the culture medium 11a by the electric pump 7, and the water passes through the culture medium 11a and the drainage space 11b and flows to the water storage tank 5, thereby constituting the circulating waterway 6.

The cultivation mechanism 151 includes the solar power generation panel 8 for supplying electric power to the electric pump 7 and the like. The electric power generated by the solar power generation panel 8 is stored in the battery 10. The IoT device 9 is inserted between the battery 10 and the solar power generation panel 8.

The IoT device 9 of this cultivation mechanism 151 is also used for centralized management similar to that in the embodiment described above.

This cultivation mechanism 151 has a mechanism in which the drainage space 11b is provided under the bottom of the cultivation region such that water in soil or a culture medium does not stop even in the case where the cultivation region of crops is in a single stage, thereby guiding the drained water to the water storage tank 5 and circulating the water in the water storage tank 5. As a result, the risk of root rot and other diseases is reduced as compared with a simple automatic water supply system that uses the water level difference to keep the water level constant, on-site irrigation management of potted cultivation of fruit trees can be performed only by replenishing water in the water storage tank even in an indoor space where water cannot be drained to the outside, and large-scale agriculture by centralized management with the IoT device 9 can be performed even near windows of scattered offices or living spaces.

Note that in the present invention, the installation position of the solar power generation panel 8 with respect to the cultivation mechanism 151 is not particularly limited. Further, although not shown, a small fan for blowing air toward crops may be disposed, for example, near the culture medium 11a. In this case, the battery 10 may supply electric power to the fan. Further, an IoT device (not shown) may be inserted between the fan and the battery 10, and the air blowing may be centrally managed for 24 hours (all day) from a remote location.

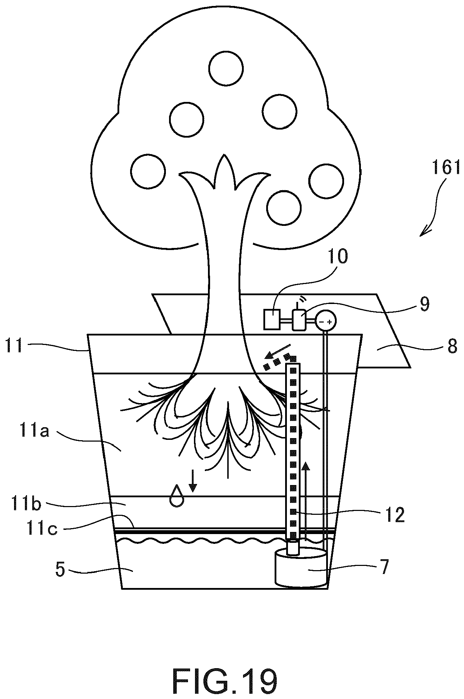

Note that although water is supplied from above the culture medium 11a by the electric pump 7 and the water passes through the culture medium 11a and the drainage space 11b and flows to the water storage tank 5, thereby constituting the circulating waterway 6 in the embodiment described above, an impermeable layer 11c may be provided between the drainage space 11b and the water storage tank 5 so as not to circulate water to the water storage tank 5 and the water supplied from the water storage tank 5 may be supplied to the culture medium 11a through a simple water supply waterway 12, as in a cultivation mechanism 161 shown in Fig. 19. That is, this cultivation mechanism 161 is configured such that the drainage space 11b is provided under the bottom of a cultivation region such that water in soil or a culture medium does not stop even in the case where the cultivation region of crops is in a single stage and the water is substantially not drained by providing the impermeable layer 11c between the drainage space 11b and the water storage tank 5 and adjusting the amount of water supplied from the water storage tank 5 so as not to exceed the amount of water retained in the soil or culture medium of the cultivation region. As a result, even for crops for which the management of water quality is desired more than the case of circulating the drained water, large-scale agriculture by centralized management with the IoT device 9 can be performed even near windows of scattered offices or living spaces.

<Others>

The present invention is not limited to the embodiment described above, and various modifications and applications are possible within the technical idea of the present invention. The scope of implementation by such modifications and applications also belong to the technical scope of the present invention.

For example, in the embodiment described above, strawberries have been illustrated as agricultural products to be cultivated. This is because local consumption forms such as strawberry picking are widely recognized and strawberries have a merit that strawberries can be consumed in urban areas while reducing the transportation and shipping costs by growing the strawberries in a way in which the strawberries can be harvested also from the room side in a place where many people gather such as offices in urban areas and large-scale commercial facilities. However, the agricultural products may be vegetables with a high purchase record as organic ingredients such as tomatoes, eggplants, and cucumbers, fruits and vegetables such as melons, watermelons, and mangoes, which need to be careful about pest damage and whose careful growth tends to add value, and the like. For example, there is an advantage that also a north-facing space near a window of an office building can be developed as an agricultural production region by cultivating flowers such as Phalaenopsis orchids that need to avoid direct sunlight.

In the present invention, an openable/closable green wall may have excellent interior design on both surfaces as described below. Further, the method of opening and closing the openable/closable cultivation shelves may be not only a method of opening and closing with a pole as an axis but also a method of including wheels in the leg part of the device and moving and opening/closing.

(1) A green wall may be configured such that crops to be harvested are planted on the sun side, a backboard includes a fence formed of a metal material, or the like, a foliage plant that can be grown with the existing lighting amount within the range normally used in the installation room is disposed on the room side, and water in a circulating waterway is supplied also to the plant on the room side.

(2) A green wall may be configured such that crops to be harvested are planted on the sun side, a fake green is disposed on the room side, and no maintenance is required on the room side.

(3) A waterfall interior decoration may be configured such that crops to be harvested are planted on the sun side, most of a backboard is formed of a transparent material such as glass and acrylic, and how circulating water falls down the transparent part can be appreciated, and may have a structure in which the water falling down the waterwall can be supplied to a cultivation region on the sun side. Further, a gap may be left in the green wall at an arbitrary place and arbitrary intervals such that light can be indirectly collected in the room through the fluctuation of falling water and adjustment may be made such that the backboard part is exposed to direct sunlight.

(4) Crops to be harvested are planted on the sun side, and a fake green may be disposed in a gap of a cultivation region or around the cultivation region as long as the fake green does not interfere with growth of the crops such that exterior design can be improved when the window is viewed from the outside or one or some of the cultivation mechanisms installed side by side may be used as not cultivation regions but logo display of the company in which the cultivation mechanisms are installed.

(5) Crops to be harvested are planted on the sun side, and the room side may be used as a scene of a publicity material in an office by using part or all of an interior surface as a space for displaying the logo of the company in which the cultivation mechanism is installed.

(6) Crops to be harvested are planted on the sun side, and a backboard may include a wooden fence with design in harmony with nature even when viewed from the room side such that the harmony with expansion of a crop cultivation region when the openable/closable part is opened and the continuity of green interior decoration on the surface are provided.

(7) Crops to be harvested are planted on the sun side, and the room side may have art such as forging, metal-carving, and painting or a space for displaying the art.

In the embodiment described above, the predetermined intervals between the shelf boards 2 are variable. Examples of method of making the intervals variable include providing screw holes in the poles in the vertical direction at predetermined intervals for holding the shelf boards and screwing the respective shelf boards at desired positions or providing holding grooves for holding the shelf boards in the poles vertically and plating the respective shelf boards in the holding grooves at desired positions. However, the present invention is not limited to the method of making the intervals variable, and the intervals may be fixed.

Although waters is supplied and circulated to crops using the electric pump 7 and the water storage tank 5 in the embodiment described above, the present invention is not limited thereto. For example, a water storage tank that stores water may be disposed at a position above the crops to be cultivated and the crops may be supplied with water by gravity.

Reference Signs List

1 pole
2 shelf board
2A planter
3 cultivation surface
4 harvesting work space
5 water storage tank
6 circulating waterway
7 electric pump
8 solar power generation panel
9 IoT device
10 battery
11 pot
11a culture medium
11b drainage space
11c impermeable layer
12 water supply waterway
14 inner pot
15 outer pot
16 drain hole
17 green wall board
18 hinge
19 interior surface
20 rotating wall
21 pot
22 donut-shaped water receiver
23 rotating rail
24 equilibrium weight
25 rotating-rope caulking portion
26 wire rope
27 ropeway roller
100 cultivation system
101 cultivation mechanism
102 building
103 window
111 cultivation mechanism
121 cultivation mechanism
131 cultivation mechanism
141 cultivation mechanism
151 cultivation mechanism
161 cultivation mechanism

**Claims**

1. A cultivation method comprising:

   installing a cultivation mechanism that

   has cultivation regions that are for cultivating the crops and are disposed in multiple stages in a vertical direction,
   has a structure in which the cultivation regions of the respective stages are entirely exposed to natural light of an amount necessary for growth of the crops,
   is capable of supplying water to the crops, and
   has two-sided designability that enables the cultivation mechanism to serve as interior decoration even when viewed in a direction from a back side of the cultivation mechanism relative to a light source for causing the crops to photosynthesize, in a state in which the cultivation regions are directed to the light source,

   in a vicinity of a window such that the cultivation regions of the respective stages are exposed to natural light through the window in an indoor space in which temperature is routinely controlled by an air conditioning device to cultivate the crops.

2. The cultivation method according to claim 1, wherein

the cultivation mechanism is capable of supplying and circulating the water to the crops by an electric pump.

3. The cultivation method according to claim 1 or 2, wherein
the cultivation mechanism includes cultivation shelves in which shelf boards having cultivation regions that function as a circulating waterway for supplying water to the crops are disposed in multiple stages in a vertical direction, the cultivation method further comprising:

installing the cultivation mechanism such that a front surface of the cultivation shelves is close to the window; and
adjusting intervals between the shelf boards such that an entire range that is desired to be exposed to direct sunlight for proper growth of the crops in the cultivation regions in all the stages is exposed to direct sunlight through the window and a space where the crops can be appreciated from a back surface side of the cultivation shelves and the crops can be harvested can be provided.

4. The cultivation method according to claim 1 or 2, wherein

the crops are not suitable for growth by direct sunlight, the cultivation method further comprising
adjusting the intervals between the shelf boards such that the cultivation regions in all the stages are not exposed to direct sunlight through the window and are exposed to optimum reflected light and a space where the crops can be appreciated from a back surface side of the cultivation shelves and the crops can be harvested can be provided.

5. The cultivation method according to any one of claims 2 to 4, further comprising
making it possible to widen and/or narrow the intervals between the shelf boards by an installer as necessary.

6. The cultivation method according to claim 1 or 2, wherein

the cultivation mechanism has a structure in which the cultivation regions are tilted toward a direction of a front surface and the intervals between the stages are narrowed to increase density of the cultivation regions, and can be opened and closed with a pole as an axis, the cultivation method further comprising
installing the cultivation mechanism in a vicinity of the window such that the front surface faces a window side, making it possible to

directly collect natural light in the cultivation regions through the window when the cultivation mechanism is closed,
make the cultivation mechanism have interior designability on a back surface side of the cultivation regions, which is a room side, when the cultivation mechanism is closed, and
care and/or harvest the crops from the room side when the cultivation mechanism is opened.

7. The cultivation method according to any one of claims 1 to 6, further comprising:

using each sunshine duration as a classification factor for each of the cultivation mechanisms to create a record ledger; and
reaggregating, for each common classification, 50 cm mesh to 50 m mesh units of extremely small agricultural lands as agricultural lands of virtually the same condition to perform virtual large-scale agriculture.

8. The cultivation method according to claim 7, further comprising:

using a window direction and air-conditioning set temperature of an installation environment, which are characteristic factors when using an existing indoor living working environment as an agricultural land, as classification factors of the extremely small agricultural lands together with a cumulative sunshine duration for each solar zenith angle of the installation environment of the cultivation mechanism during a period of growing the crops; and
virtually dividing the extremely small agricultural lands into groups with shifted seasons on a basis of temperature, an amount of water, and a sunshine duration for each sunshine angle and changing growth conditions to avoid harvesting out of season and/or concentration of harvest season.

9. The cultivation method according to any one of claims 1 to 8, further comprising
setting, in exchange for provision of the cultivation mechanism to the indoor space as interior decoration and/or acting for farm work necessary for harvesting crops of the cultivated crops, a right to use a region in which the cultivation mechanism is installed and a right to own or sell the harvested crops.

10. A cultivation mechanism, comprising:

cultivation shelves in which shelf boards having cultivation regions that function as a waterway for cultivating crops and supplying water to crops to be cultivated are disposed in multiple stages in a vertical direction; and

an electric pump for water circulation and a water storage tank that circulate the water drained from the cultivation regions of the respective shelf boards to the cultivation regions of the respective shelf boards, wherein

the cultivation mechanism has a mechanism capable of arbitrarily adjusting intervals between the shelf boards, and

a depth of each of the cultivation regions as viewed from one side of the cultivation shelves is set such that an entire range necessary for growth of the crops in each of the cultivation regions is exposed to natural light collected from the one side in the adjusted intervals between the shelf boards.

**11.** A cultivation mechanism that has cultivation regions in multiple stages in a vertical direction, each of the cultivation regions functioning as a waterway for cultivating crops and supplying water to crops to be cultivated, the cultivation regions being tilted to one side, intervals between the stages being narrowed to increase density of the cultivation regions, comprising:

an electric pump for water circulation and a water storage tank that circulate the water drained from each of the cultivation regions to each of the cultivation regions, wherein

natural light can be directly collected in the cultivation regions from the one side when the cultivation mechanism is closed,

the cultivation mechanism has interior designability on a back surface side of the cultivation regions when the cultivation mechanism is closed, and

the cultivation mechanism has a structure that can be opened and closed with a pole as an axis so that the crops can be cared and/or harvested from the other side when the cultivation mechanism is opened.

**12.** The cultivation method according to claim 10 or 11, further comprising a fan for blowing air toward the crops.

**13.** The cultivation method according to any one of claims 10 to 12, further comprising
a solar power generation panel for supplying electric power to the electric pump for water circulation.

**14.** A cultivation system using the cultivation mechanism according to any one of claims 10 to 13, wherein

the cultivation mechanism is installed in a building such that the cultivation regions of the cultivation mechanism are close to a window of the building.

**15.** A cultivation method, comprising:

installing a cultivation mechanism that has a cultivation region that is for cultivating the crops and is disposed in a single stage, is capable of supplying water to the crops, and has a structure in which the water is drained to a lower part of the cultivation region such that the water does not stay in the cultivation region and the drained water is received and does not flow out of the cultivation mechanism, in a vicinity of a window such that the cultivation region is exposed to natural light through the window in an indoor space in which temperature is routinely controlled by an air conditioning device to cultivate the crops, the cultivation mechanism including a water storage tank that stores the water drained from the lower part of the cultivation region, an electric pump for circulating the water stored in the water storage tank to the cultivation region, and a solar power generation panel for supplying electric power to the electric pump; and
supplying and circulating the water to the cultivation region in the single stage without using external electric power.

**16.** The cultivation method according to claim 10, further comprising
setting, in exchange for provision of the cultivation mechanism to the indoor space as interior decoration and/or acting for farm work necessary for harvesting crops of the cultivated crops, a right to use a region in which the cultivation mechanism is installed and a right to own or sell the harvested crops.

**17.** The cultivation method according to any one of claims 1 to 9, 15, or 16, wherein
the cultivation region of the cultivation mechanism is 10 square meters or less.

**18.** The cultivation method according to any one of claims 2 or 15 to 17, wherein
the cultivation mechanism includes an IoT device that turns on and off a power source of the electric pump, making it possible to control an operation and stopping of the electric pump from a remote location.

~Outdoor~ 102 100 : Cultivation system

~Indoor~

103 : Window

Natural light

101 : Cultivation mechanism

FIG.1

FIG.2

FIG.3

FIG.4

Natural light

FIG.5

# FIG.6

FIG.7

111

15

1

17

18

~19~

6

7

8

5

18

Outdoor

Indoor

# FIG.8

FIG.9

15

FIG.10

15

14

16

FIG.11

121

8

20

21

5

8

Outdoor

Indoor

FIG.12

FIG.13

FIG.14

FIG.15

FIG.16

FIG.17

FIG.18

FIG.19

**INTERNATIONAL SEARCH REPORT**

| | International application No. |
|---|---|
| | PCT/JP2020/031962 |

**A. CLASSIFICATION OF SUBJECT MATTER**
A01G 7/00(2006.01)i; A01G 9/00(2018.01)i; A01G 9/02(2018.01)i
FI: A01G9/02 B; A01G9/00 C; A01G7/00 603; A01G9/02 103W; A01G7/00 601A
According to International Patent Classification (IPC) or to both national classification and IPC

**B. FIELDS SEARCHED**

Minimum documentation searched (classification system followed by classification symbols)
A01G7/00; A01G9/00; A01G9/02

Documentation searched other than minimum documentation to the extent that such documents are included in the fields searched
    Published examined utility model applications of Japan      1922–1996
    Published unexamined utility model applications of Japan      1971–2020
    Registered utility model specifications of Japan      1996–2020
    Published registered utility model applications of Japan      1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | Microfilm of the specification and drawings annexed to the request of Japanese Utility Model Application No. 053582/1978 (Laid-open No. 155857/1979) (MATSUSHITA ELECTRIC INDUSTRIAL CO., LTD.) 30 October 1979 (1979-10-30) pp. 1-6, drawings | 1-4, 10 |
| Y | pp. 1-6, drawings | 5-6, 11-15, 17-18 |
| A | pp. 1-6, drawings | 7-9, 16 |
| Y | JP 2013-146229 A (NIPPON SYSTEMWARE CO., LTD.) 01 August 2013 (2013-08-01) paragraph [0030] | 5-6, 11-15, 17-18 |
| Y | JP 2007-107275 A (IMAZEKI, Masami) 26 April 2007 (2007-04-26) claims, fig. 2, 3 | 6, 11-15, 17-18 |
| Y | JP 2000-93026 A (BIISONIKKU KK) 04 April 2000 (2000-04-04) drawings | 6, 11-15, 17-18 |
| Y | JP 2015-149968 A (CCS INC.) 24 August 2015 (2015-08-24) claim 4 | 12-15, 17-18 |
| Y | JP 2014-10594 A (MOCHIZUKI, Atsuro) 20 January 2014 (2014-01-20) claim 6 | 13-15, 17-18 |

☐   Further documents are listed in the continuation of Box C.     ☒   See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
|      09 November 2020 (09.11.2020) |      17 November 2020 (17.11.2020) |

| Name and mailing address of the ISA/ | Authorized officer |
|---|---|
|    Japan Patent Office<br>   3-4-3, Kasumigaseki, Chiyoda-ku,<br>   Tokyo 100-8915, Japan | |
| | Telephone No. |

Form PCT/ISA/210 (second sheet) (January 2015)

35

**INTERNATIONAL SEARCH REPORT**

Information on patent family members

International application No.

PCT/JP2020/031962

| Patent Documents referred in the Report | Publication Date | Patent Family | Publication Date |
|---|---|---|---|
| JP 54-155857 U1 | 30 Oct. 1979 | (Family: none) | |
| JP 2013-146229 A | 01 Aug. 2013 | (Family: none) | |
| JP 2007-107275 A | 26 Apr. 2007 | (Family: none) | |
| JP 2000-93026 A | 04 Apr. 2000 | (Family: none) | |
| JP 2015-149968 A | 24 Aug. 2015 | (Family: none) | |
| JP 2014-10594 A | 20 Jan. 2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019062769 A